# EUROPÄISCHE PATENTSCHRIFT

(11) **EP 1 673 751 B1**
(45) Veröffentlichungstag und Bekanntmachung des Hinweises auf die Patenterteilung: **24.01.2007**
(21) Anmeldenummer: 04765635.0
(22) Anmeldetag: 24.09.2004
(51) Int. Cl.: G08G 1/16, G06K 9/68

(54) **VERFAHREN UND VORRICHTUNG ZUR SICHTBARMACHUNG EINER FAHRZEUGUMGEBUNG**
METHOD AND DEVICE FOR VISUALISING THE SURROUNDINGS OF A VEHICLE
PROCEDE ET DISPOSITIF POUR VISUALISER L'ENVIRONNEMENT D'UN VEHICULE

(30) Priorität: 16.10.2003 DE 10348109
(43) Veröffentlichungstag der Anmeldung: 28.06.2006
(73) Patentinhaber: Bayerische Motoren Werke Aktiengesellschaft, 80809 München (DE)
(72) Erfinder: HAHN, Wolfgang, 85247 Schwabhausen (DE); WEIDNER, Thomas, 81671 München (DE)
(86) Internationale Anmeldenummer: PCT/EP2004/010809
(87) Internationale Veröffentlichungsnummer: WO 2005/038743

(56) Entgegenhaltungen:
- DE-A- 10 207 039
- US-A1- 2002 136 435
- AMDITIS A ET AL: "Multiple sensor collision avoidance system for automotive applications using an IMM approach for obstacle tracking" PROCEEDINGS OF THE FIFTH INTERNATIONAL CONFERENCE ON INFORMATION FUSION. FUSION 2002. (IEEE CAT.NO.02EX5997) INT. SOC. INF. FUSION SUNNYVALE, CA, USA, Bd. 2, 2002, Seiten 812-817 vol.2, XP010594274 ISBN: 0-9721844-1-4 in der Anmeldung erwähnt

## Beschreibung

Die Erfindung betrifft ein Verfahren zur Sichtbarmachung einer Fahrzeugumgebung, insbesondere zur Erfassung und Darstellung der vor einem Fahrer liegenden Verkehrssituation mit einem Nachtsichtinformationssystem, bei dem weitgehend orts- und zeitgleiche Videobilder aus unterschiedlichen Spektralbereichen fusioniert werden, und bei dem bei der Fusion der Videobilder die unterschiedlichen Spektralbereiche mit Wichtungsfaktoren versehen werden.

Die Erfindung betrifft weiterhin eine Vorrichtung zur Sichtbarmachung einer Fahrzeugumgebung, insbesondere zur Erfassung und Darstellung der vor einem Fahrer liegenden Verkehrssituation mit einem Nachtsichtinfofmationssystem, bei der mit einem Kamerasystem weitgehend orts- und zeitgleiche Videobilder aus unterschiedlichen Spektralbereichen aufnehmbar sind, und bei der die Videobilder mit einer Fusionseinrichtung gewichtet fusionierbar sind.

Zur Unterstützung der Sichtverhältnisse für den Fahrer eines Fahrzeuges bei Nacht oder bei ungünstiger Witterung, beispielsweise bei Regen, Nebel, oder Schneetreiben, sind Nachtsichtinformationssysteme bekannt. Diese Systeme nehmen Videobilder einer vor dem Fahrer liegenden Verkehrssituation auf, um sie die dem Fahrer auf einem Display zu präsentieren. Nachtsichtinformationssysteme arbeiten meist mit einer Infrarot (IR)-Kamera, die ein Wärmeabbild eines Ausschnitts der Umgebung detektiert. Dem Fahrer wird dadurch ein Hilfsmittel zur Verfügung gestellt, um wärmeabstrahlende Objekte, die unbeleuchtet und daher nicht unmittelbar von dem Fahrer wahrnehmbar sind, insbesondere Fußgänger, Radfahrer oder Tiere, bei ungünstigen Sichtverhältnissen frühzeitig zu erkennen und Unfälle zu vermeiden.

Aus der DE 102 07 039 A1 ist ein Verfahren und eine Vorrichtung zur Sichtbarmachung einer Fahrzeugumgebung bekannt, bei dem zusätzlich zu der IR-Kamera für den infraroten Spektralbereich, eine VIS-Kamera für den sichtbaren (visuellen) Spektralbereich in einem Nachtsichtinformationssystem eingesetzt wird. In einer Fusionseinrichtung werden jeweils ein im Wesentlichen orts- und zeitgleiches digitalisiertes IR-Abbild und ein VIS-Abbild softwaremäßig pixelgenau überlagert. Dabei werden einzelne Pixelpaare oder ganze Pixelbereiche durch eine gewichtete Mittelwertbildung der Pixelinformationen bearbeitet. Bei der Mittelwertbildung können die IR-Informationen und die VIS-Informationen unterschiedlich gewichtet werden, insbesondere in Abhängigkeit von der Umgebungshelligkeit, von der Farbe im visuellen Abbild oder von einem aus der Informationstheorie ableitbaren Informationsreichtum im jeweiligen Spektralbereich. Die Gewichtung kann ganzflächig oder in einzelnen Bildbereichen erfolgen. Durch die Überlagerung des IR-Bildes mit dem VIS-Bild kann der Fahrer die vor ihm liegende Verkehrssituation, die er visuell durch die Windschutzscheibe erfasst, und die entsprechende Verkehrssituation, die durch das Nachtsichtinformationssystem per Videobild dargestellt wird, leichter einander zuordnen als bei einem Nachtsichtinformationssystem, das nur mit IR-Abbildern arbeitet.

Nachteilig bei dem bekannten Verfahren wirkt sich aus, dass der Kontrast in den fusionierten Bildern über die Bildfläche relativ einheitlich eingestellt wird. Die einstellbare Gewichtung des IR-Bildes und des VIS-Bildes bei der Mittelwertbildung des fusionierten Bildes verbessert zwar insgesamt die Kontrastierung gegenüber nicht gewichteten Bildern, verschiedene Einzelheiten innerhalb eines Bildbereichs werden dabei jedoch gleich behandelt. Dies kann dazu führen, dass sich auf dem angezeigten Videobild in bestimmten Verkehrssituationen wichtige Einzelheiten, beispielsweise Personen auf der Fahrbahn, nicht in einem gewünschten Maße von der Umgebung abheben.

Aufgabe der vorliegenden Erfindung ist es daher, das bekannte Verfahren zur Sichtbarmachung einer Fahrzeugumgebung mit einem Nachtsichtinformationssystem so zu verbessern, dass die Wahrnehmbarkeit einzelner Bildobjekte erhöht wird.

Die Aufgabe wird erfindungsgemäß in Verbindung mit dem Oberbegriff des Anspruchs 1 dadurch gelöst, dass erstens die Videobilder mit einem global eingestellten vorläufigen Wichtungsfaktor gewichtet werden, dass zweitens mit Hilfe eines Objekterkennungssystems eine Objektanalyse der Videobilder durchgeführt wird, und dass drittens aufgrund der Objektanalyse eine objektselektive lokale Anpassung der Wichtungsfaktoren vorgenommen wird.

Die objektselektive Anpassung der Wichtungsfaktoren ermöglicht, dass detektierte Objekte in der Fahrzeugumgebung kontrastoptimal zur besseren Wahmehmung durch den Fahrer dargestellt werden, da die spektralen Anteile, die den größten Beitrag zur Wahrnehmung der Objekte leisten, stärker gewichtet werden. Dazu wird zunächst eine vorläufige flächendeckende (globale) Gewichtung der spektralen Anteile für die Bildfusion, beispielsweise je die halbe Intensität des VIS-Spektralbereichs und des IR-Spektralbereichs eingestellt. Unter Bildfusion wird dabei grundsätzlich die Bildung neuer Pixel aus einer gewichteten Mittelwertbildung der Intensität zugeordneter Pixelpaare, als auch die Überlagerung mit einer gewichteten Addition der Intensitäten verstanden. Anschließend erfolgt die lokale Anpassung der Wichtungsfaktoren und deren endgültige Festlegung anhand der durch das Objekterkennungssystem detektierten, bzw. erkannten Objekte.

Geeignete Objekterkennungssysteme stehen im Prinzip zur Verfügung. Ihre Funktionsweise ist beispielsweise aus der DE 199 55 919 C1 und den darin enthaltenen Querverweisen bekannt. Sie beruhen in der Regel auf einer automatischen Objektanalyse von digitalen Bildern oder auf einer Mustererkennung und liefern eine Aussage über das Vorhandensein bestimmter vorgegebener Objekte. Das erfindungsgemäße Objekterkennungssystem führt in jedem aufgenommenen Spektralbereich ein Bildanalyse durch. Anhand der Erkennung und Unterscheidung detektierter Objekte, beispielsweise Personen, Tiere, Hindernisse, können die spektralen Wichtungsfaktoren dann in den jeweiligen Bildbereichen je nach ihrer Strahlungsstärke im Sichtbaren und im Infraroten gezielt angepasst werden. Die Wichtungsfaktoren können so eingestellt werden, dass die detektierten Objekte jeweils hauptsächlich in dem Spektralbereich dargestellt werden, in dem sie für den Fahrer am deutlichsten auf dem fusionierten Videobild wahrnehmbar sind. Insbesondere können so Personen und Wild, die in größerer Entfernung keine visuellen Anteile aufweisen, aber im Infraroten sehr gut detektierbar sind, durch diese Anpassung noch besser in die eigene Fahrzeugumgebung eingeordnet werden, da eine Kontrastverminderung durch die Fusion mit dem dunklen Hintergrund entfällt. Entsprechend werden Objekte, die im Visuellen eine signifikant bessere Signatur hinterlassen, wie beispielsweise Straßenbegrenzungspfosten aufgrund der angebrachten Reflektoren, mit einer stärkeren Gewichtung im Visuellen versehen.

Gemäß einer bevorzugten Ausführungsform der Erfindung wird mit Hilfe des Objekterkennungssystems eine Objektbewertung der detektierten Objekte nach ihrer Relevanz durchgeführt, und die lokalen Wichtungsfaktoren werden an die aufgrund der Objektbewertung zugeordnete Relevanz des jeweiligen Objektes angepasst, so dass vorgegebene detektierte Objekte jeweils hauptsächlich in dem Spektralbereich dargestellt werden, in dem sie für den Fahrer am deutlichsten auf dem fusionierten Videobild wahrnehmbar sind.

Durch die Objektbewertung kann eine gezielte Verstärkung, bzw. Abschwächung lokaler Wichtungsfaktoren vorgenommen werden. Insbesondere ist es dadurch möglich, mit einer Übergewichtung eines bestimmten Spektralanteils den Fahrer explizit auf besonders relevante, insbesondere auf gefährliche und/oder gefährdete Objekte, aufmerksam zu machen. Dadurch kann eine erhöhte Sicherheit für sich (den Fahrer) und andere Verkehrsteilnehmer bei Dunkelheit und schlechter Sicht erreicht werden. Die Übergewichtung kann zum einen durch eine lokale Anhebung im interessanten Bildbereich oder durch eine Verringerung eines spektralen Anteils in der Objektumgebung erfolgen.

Für die Objektbewertung besonders geeignet sind Objekterkennungssysteme, die mit einer Objektklassifizierung arbeiten. Anhand verschiedener Objektklassen, beispielsweise Personen, Tiere, Fahrzeuge, Hindernisse, u.s.w., kann eine besonders schnelle und zuverlässige Einstufung der Relevanz der detektierten Objekte vorgenommen werden.

Nach einer weiteren bevorzugten Ausführungsform der Erfindung werden Bildbereiche, in denen keine relevanten Objekte detektiert werden oder deren Relevanz nicht eindeutig zugeordnet werden kann, mit dem global eingestellten Wichtungsfaktor gewichtet.

Durch die Einstellung des globalen Wichtungsfaktors in Bildbereichen ohne relevante Objekte oder ohne eindeutige Zuordnung wird sichergestellt, dass auch die Informationen dieser Bildbereiche dem Fahrer zur Ansicht gebracht werden.

Gemäß einer weiteren bevorzugten Ausführungsform der Erfindung wird zwischen benachbarten relevanten und nicht relevanten Bildbereichen, mit Hilfe eines varüerbaren Kennlinienverlaufs des Verhältnisses der Wichtungsfaktoren der unterschiedlichen Spektralbereiche, ein stetiger Übergang in dem fusionierten Videobild erzeugt.

Durch den stetigen Übergang zwischen besonders hervorgehobenen, weil relevanten, Bildbereichen und deren Umgebung, wird durch den unmerklichen weichen Verlauf ein harmonischer und realistischer Bildeindruck in dem jeweiligen fusionierten Videobild erzeugt.

Nach einer weiteren bevorzugten Ausführungsform der Erfindung werden bei der Fusion der Videobilder Strahlungsanteile mit Wellenlängen aus dem Sichtbaren Spektralbereich und Strahlungsanteile mit Wellenlängen aus dem Infraroten Spektralbereich berücksichtigt.

Durch die Detektion des Sichtbaren Spektralbereichs (ca. 380nm - 780nm) werden alle für das menschliche Auge leuchtenden, bzw. beleuchtete Objekte erfasst. Im Infrarotbereich (ca. 780nm - 1 mm) werden alle Objekte, die eine Wärmestrahlung aussenden, erfasst. Dadurch wird ein, die aktuelle Verkehrssituation umfassend wiedergebender, Informationsgehalt in den fusionierten Bildern erreicht. Insbesondere bei Personen, die durch keine Beleuchtung erfasst werden und somit keine visuelle Strahlung reflektieren, ist eine stärkere Gewichtung im FIR-Spektralbereich (ca. 25µm - 1mm) besonders effektiv.

Gemäß einer weiteren bevorzugten Ausführungsform werden in den visuellen Videobildern Farbinformationen verarbeitet.

Die Farbinformationen können in den fusionierten Bildern die Wahmehmbarkeit bestimmter Objekte noch weiter verbessern. Die Wirkung der objektselektiven Gewichtung wird dadurch unterstützt. Der Fahrer kann beispielsweise noch deutlicher auf rote Bremsleuchten, Ampeln, oder Signalanlagen, aufmerksam gemacht werden, wodurch die aktuelle Verkehrssituation noch schneller erfasst wird und sich die Unfallgefahr weiter verringert.

Nach einer weiteren bevorzugten Ausführungsform der Erfindung werden Maskierungs- und/oder Verdeckungseffekte von detektierten Objekten mit Hilfe der Anpassung der lokalen Wichtungsfaktoren zumindest teilweise unterdrückt.

Durch die lokalen Wichtungsfaktoren werden mögliche Maskierungs- und Verdeckungseffekte kontrollierbar. Durch eine gezielte Veränderung der Wichtungsfaktoren in den Verdeckungsbereichen kann die Verdeckung erheblich unterdrückt werden. Die Interpretierbarkeit der dargestellten Bilder wird dadurch zusätzlich verbessert.

Die aus der DE 102 07 039 A1 bekannte Vorrichtung zur Sichtbarmachung einer Fahrzeugumgebung hat den Nachteil, dass sie die vor einem Fahrer liegende Verkehrssituation in verschiedenen Spektralbereich zwar bildlich jedoch nicht inhaltlich erfasst. Dies kann dazu führen, dass relevante Objekte dem Fahrer relativ unscheinbar angezeigt werden.

Weitere Aufgabe der vorliegenden Erfindung ist es daher, die bekannte Vorrichtung zur Sichtbarmachung einer Fahrzeugumgebung so zu verbessern, dass relevante Bildobjekte signifikanter anzeigbar sind.

Die Aufgabe wird erfindungsgemäß in Verbindung mit dem Oberbegriff des Anspruchs 9 dadurch gelöst, dass der Fusionseinrichtung ein Objekterkennungssystem vorgeschaltet ist, mit dem Objekte, die sich in der Fahrzeugumgebung befinden, über das Kamerasystems detektierbar sind, und dass eine Steuereinrichtung vorgesehen ist, über die in Wirkverbindung mit dem Objekterkennungssystem die Fusionseinrichtung mit einer objektselektiven lokalen Spektralbereichsgewichtung ansteuerbar ist.

Durch die Wirkverbindung des Nachtsichtinformationssystems, das über das Kamerasystem Bildinformationen aus mindestens zwei unterschiedlichen Spektralbereichen kombiniert, mit dem Objekterkennungssystems, kann der Fahrer auf besonders wichtige, d.h. relevante Objekte, wie beispielsweise Personen, besonders aufmerksam gemacht werden, da diese Objekte durch die objektselektive Spektralbereichsgewichtung in den fusionierten Videobildern besonders hervorgehoben werden können. Insgesamt wird der Kontrast in den fusionierten Videobildern erhöht, da grundsätzlich alle detektierten Objekte in dem Spektralbereich dargestellt werden können, in dem sie die beste Signatur hinterlassen, d.h. am signifikantesten erscheinen.

Gemäß einer bevorzugten Ausführungsform der Erfindung weist das Kamerasystem mindestens einen im Sichtbaren Spektralbereich empfindlichen und mindestens einen im Infraroten Spektralbereich empfindlichen Sensor auf.

Dadurch, dass das Kamerasystem Objekte im Sichtbaren und im Infraroten detektieren kann, können sichtbare Objekte, als auch reine Wärmestrahler, in den fusionierten Videobildern dargestellt werden. Dadurch wird eine sehr hohe Wahrnehmungsqualität und eine einfache Zuordnung der Anzeige des Nachtsichtinformationssystems zu der vor dem Fahrer liegenden Verkehrssituation erreicht.

Nach einer weiteren bevorzugten Ausführungsform der Erfindung ist ein Head-up-Display vorgesehen ist, auf dem die fusionierten Videobilder dem Fahrer präsentierbar sind.

Durch das Head-up-Display: können die fusionierten Videobilder insbesondere auf einen unteren Teil der Windschutzscheibe eines Fahrzeugs projiziert werden. Die Bilder erscheinen dadurch im unmittelbaren Blickfeld des Fahrers ohne die Geradeaussicht des Fahrers zu stören, wodurch bei dem Fahrer ein besonders hoher Aufmerksamkeitsgrad erreicht wird und ein schnelle Reaktion bei einer wahrgenommenen Gefahr erfolgen kann. Grundsätzlich ist es selbstverständlich aber auch möglich, die Videobilder auf einem herkömmlichen Monitor, beispielsweise einem LCD-Display, darzustellen.

Weitere Einzelheiten der Erfindung ergeben sich aus der nachfolgenden ausführlichen Beschreibung und der beigefügten Zeichnung, in der eine bevorzugte Ausführungsform der Erfindung beispielsweise veranschaulicht ist.

Es zeigt:

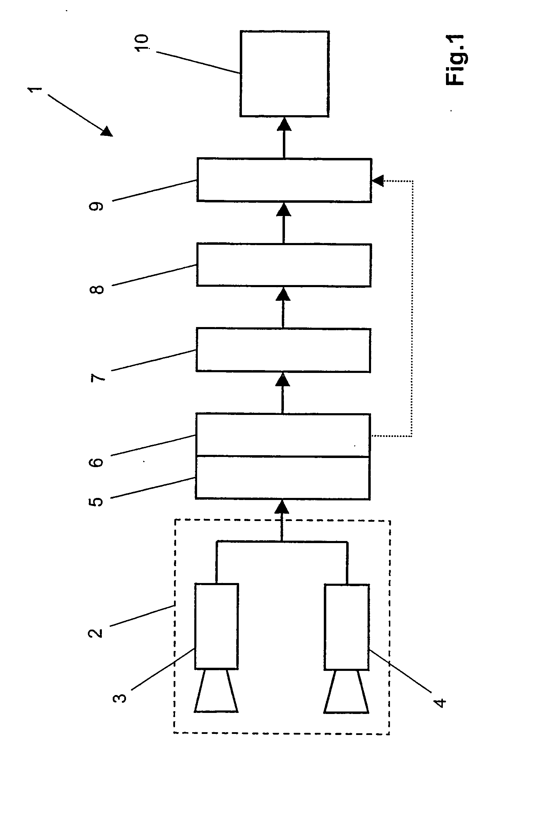

- Figur 1:: Ein Blockschaltbild einer Vorrichtung zur Sichtbarmachung einer Fahrzeugumgebung.

Eine Vorrichtung zur Sichtbarmachung einer Fahrzeugumgebung, besteht im Wesentlichen aus einem in einem Fahrzeug eingebauten Nachtsichtinformationssystem 1, das ein Objekterkennungssystem 5 aufweist.

Der Aufbau des in Fig. 1 als Blockschaltbild dargestellten Nachtsichtinformationssystems 1 entspricht prinzipiell dem aus der DE 102 07 039 A1 bekannten System.

In einem Kamerasystem 2 ist eine Visuell-Kamera 3 zur Aufnahme von Videobildern im Sichtbaren Spektralbereich sowie eine Infrarot-Kamera 4 zur Aufnahme von Videobildern aus dem Infraroten Spektralbereich angeordnet. Die Kameras sind vorteilhaft als Digitalkameras mit in den entsprechenden Spektralbereichen empfindlichen Sensoren ausgebildet. Dem Kamerasystem 2 nachgeschaltet, bzw. einer Fusionseinrichtung 9 vorgeschaltet, ist erfindungsgemäß das Objekterkennungssystem 5. Dem Objekterkennungssystem 5 ist eine Steuereinrichtung 6 zugeordnet, über die die Fusionseinrichtung 9 ansteuerbar ist. Zwischengeschaltet ist eine Normalisierungsvorrichtung 7, in der Abbildungsfehler der Videobilder auf prinzipiell bekannte Weise softwaremäßig beseitigt werden können. Weiterhin ist eine Ausrichtvorrichtung 8 vorgesehen, in der mit Hilfe einer digitalen Bildverarbeitung die orts- und zeitgleich aufgenommenen VIS-Bilder und IR-Bilder zueinander ausgerichtet werden können, so dass die jeweils zusammengehörenden Bildpaare pixelgenau zur Deckung kommen. Der Ausrichtvorrichtung 8 ist die Fusionseinrichtung 9 zur gewichteten Fusion der zur Deckung gebrachten VIS-Bilder und IR-Bilder nachgeschaltet. Die fusionierten Bilder sind auf einem Head-up-Display 10 anzeigbar.

Ein Verfahren zur Sichtbarmachung einer Fahrzeugumgebung, beruht im Wesentlichen auf einer gewichteten Fusion von weitgehend orts- und zeitgleichen Videobildern aus unterschiedlichen Spektralbereichen einer vor einem Fahrer liegenden Verkehrssituation.

Das Verfahren wird anhand der in Fig. 1 dargestellten Vorrichtung im Folgenden beschrieben:
Über das Kamerasystem 2 wird mit der für sichtbare Strahlung empfindlichen Kamera 3 und mit der für infrarote Strahlung empfindlichen Kamera 4 annähernd orts- und zeitgleich jeweils eine Aufnahme einer vor dem Fahrer liegenden Fahrzeugumgebung gemacht. Die daraus resultierende VIS-Digitalabbildung und die IR-Digitalabbildung der Fahrzeugumgebung werden in dem Objekterkennungssystem einer automatischen Bildanalyse unterzogen. Die detektierten, d.h. erkannten Objekte, werden in einer Objektklassifizierung nach ihrer Relevanz bewertet. Beispielsweise erhalten Personen, die höchste Relevanzstufe. Die Videobilder werden anschließend in der Normalisierungsvorrichtung 7 hinsichtlich vorhandener Abbildungsfehler, beispielsweise Verzerrungen, korrigiert und dann in der Ausrichtvorrichtung 8 pixelgenau zur Deckung gebracht. Die zur Deckung gebrachten Videobilder werden anschließend in der Fusionseinrichtung 9 digital verarbeitet.

Bei dieser digitalen Bildverarbeitung wird aus jedem zueinandergehörigen Pixelpaar ein fusioniertes Pixel generiert. Dabei werden der IR-Anteil und der VIS-Anteil mit Wichtungsfaktoren multipliziert. Zunächst wird ganzflächig (global) eine Gewichtung eingestellt, die beispielsweise von der Helligkeit der Umgebung (Taglicht / Dämmerung / Dunkelheit) abhängt. Die lokalen Wichtungsfaktoren werden dann in dem Objekterkennungssystem 5 anhand einer Objektanalyse bestimmt. Dabei erhalten die detektierten Objekte eine stärkere Gewichtung in dem Spektralbereich, in dem sie stärker abstrahlen. Weiterhin erhalten besonders relevante Objekte eine stärkere Gewichtung als weniger relevante Objekte. Über die Steuereinrichtung 6 wird die Fusionseinrichtung 9 dann so angesteuert, dass die lokalen Bildbereiche, die die detektierten Objekte enthalten, den lokalen Wichtungsfaktoren entsprechend gewichtet werden, d.h. im Wesentlichen in dem Spektralbereich dargestellt werden, in dem diese Objekte die beste Signatur hinterlassen. Beispielsweise werden unbeleuchtete Personen hauptsächlich im Infraroten dargestellt, reflektierende Straßenbegrenzungen werden dagegen hauptsächlich im Sichtbaren dargestellt. Weiterhin kann eine Feinabstimmung zur Erzeugung weicher Übergänge zwischen relevanten und irrelevanten Bildbereichen und eine Unterdrückung von Maskierungseffekten vorgenommen werden. Als Resultat wird ein kontrastreiches fusioniertes Videobild erzeugt, auf dem relevante Objekte besonders hervorgehoben erscheinen.

Vorzugsweise werden die visuellen Bilder mit einer Farb-VIS-Kamera aufgenommen, um ein fusioniertes Farbvideobild zu generieren. Dadurch erscheinen die Bilder realistischer und die verschiedenen detektierten Objekte sind für den Fahrer noch prägnanter erkennbar und leichter zu der vor ihm liegenden Fahrzeugumgebung zuzuordnen.

Die fusionierten Bilder werden entsprechend der Aufnahmefrequenz des Kamerasystems 2 und der Verarbeitungsgeschwindigkeit in den nachgeschalteten Einrichtungen 5 bis 9 fortlaufend auf das Head-up-Display 10 projiziert, so dass die in die Fahrzeugumgebung geratenden Objekte für den Fahrer unmittelbar zur Ansicht gebracht und von diesem mit hoher Zuverlässigkeit auch bei Dunkelheit und schlechter Sicht wahrgenommen werden.

### Bezuaszeichenliste

- 1: Nachtsichtinformationssystem
- 2: Kamerasystem
- 3: VIS-Kamera
- 4: IR-Kamera
- 5: Objekterkennungssystem
- 6: Steuereinrichtung
- 7: Normalisierungsvorrichtung
- 8: Ausrichtvorrichtung
- 9: Fusionseinrichtung
- 10: Head-up-Display

## Patentansprüche

1. Verfahren zur Sichtbarmachung einer Fahrzeugumgebung, insbesondere zur Erfassung und Darstellung der vor einem Fahrer liegenden Verkehrssituation mit einem Nachtsichtinformationssystem, bei dem weitgehend orts- und zeitgleiche Videobilder aus unterschiedlichen Spektralbereichen fusioniert werden, und bei dem bei der Fusion der Videobilder die unterschiedlichen Spektralbereiche mit Wichtungsfaktoren versehen werden, **dadurch gekennzeichnet, dass** erstens die Videobilder mit einem global eingestellten vorläufigen Wichtungsfaktor gewichtet werden, dass zweitens mit Hilfe eines Objekterkennungssystems (5) eine Objektanalyse der Videobilder durchgeführt wird, und dass drittens aufgrund der Objektanalyse eine objektselektive lokale Anpassung der Wichtungsfaktoren vorgenommen wird.

2. Verfahren nach Anspruch 1, **dadurch gekennzeichnet, dass** mit Hilfe des Objekterkennungssystems (5) eine Objektbewertung der detektierten Objekte nach ihrer Relevanz durchgeführt wird, und dass die lokalen Wichtungsfaktoren an die aufgrund der Objektbewertung zugeordnete Relevanz des jeweiligen Objektes angepasst werden, so dass vorgegebene detektierte Objekte jeweils hauptsächlich in dem Spektralbereich dargestellt werden, in dem sie für den Fahrer am deutlichsten auf dem fusionierten Videobild wahrnehmbar sind.

3. Verfahren nach Anspruch 2, **dadurch gekennzeichnet, dass** die detektierten Objekte für die Objektbewertung in Objektklassen eingeteilt werden.

4. Verfahren nach einem der Ansprüche 1 bis 3, **dadurch gekennzeichnet, dass** Bildbereiche, in denen keine relevanten Objekte detektiert werden oder deren Relevanz nicht eindeutig zugeordnet werden kann, mit dem global eingestellten Wichtungsfaktor gewichtet werden.

5. Verfahren nach einem der Ansprüche 1 bis 4, **dadurch gekennzeichnet, dass** zwischen benachbarten relevanten und nicht relevanten Bildbereichen mit Hilfe eines variierbaren Kennlinienverlaufs des Verhältnisses der Wichtungsfaktoren der unterschiedlichen Spektralbereiche, ein stetiger Übergang in dem fusionierten Videobild erzeugt wird.

6. Verfahren nach einem der Ansprüche 1 bis 5, **dadurch gekennzeichnet, dass** bei der Fusion der Videobilder Strahlungsanteile mit Wellenlängen aus dem Sichtbaren Spektralbereich und Strahlungsanteile mit Wellenlängen aus dem Infraroten Spektralbereich berücksichtigt werden.

7. Verfahren nach einem der Ansprüche 1 bis 6, **dadurch gekennzeichnet, dass** in den visuellen Videobildern Farbinformationen verarbeitet werden.

8. Verfahren nach einem der Ansprüche 1 bis 7, **dadurch gekennzeichnet, dass** Maskierungs- und/oder Verdeckungseffekte von detektierten Objekten mit Hilfe der Anpassung der lokalen Wichtungsfaktoren zumindest teilweise unterdrückt werden.

9. Vorrichtung zur Sichtbarmachung einer Fahrzeugumgebung, insbesondere zur Erfassung und Darstellung der vor einem Fahrer liegenden Verkehrssituation mit einem Nachtsichtinformationssystem, bei der mit einem Kamerasystem weitgehend orts- und zeitgleiche Videobilder aus unterschiedlichen Spektralbereichen aufnehmbar sind, und bei der die Videobilder mit einer Fusionseinrichtung gewichtet fusionierbar sind, **dadurch gekennzeichnet, dass** der Fusionseinrichtung (9) ein Objekterkennungssystem (5) vorgeschaltet ist, mit dem Objekte, die sich in der Fahrzeugumgebung befinden, über das Kamerasystems (2) detektierbar sind, und dass eine Steuereinrichtung (6) vorgesehen ist, über die in Wirkverbindung mit dem Objekterkennungssystem (5) die Fusionseinrichtung (9) mit einer objektselektiven lokalen Spektralbereichsgewichtung ansteuerbar ist.

10. Vorrichtung nach Anspruch 9, **dadurch gekennzeichnet, dass** das Kamerasystem (2) mindestens einen im Sichtbaren Spektralbereich empfindlichen und mindestens einen im Infraroten Spektralbereich empfindlichen Sensor aufweist.

11. Vorrichtung nach Anspruch 9 oder 10, **dadurch gekennzeichnet, dass** ein Head-up-Display (10) vorgesehen ist, auf dem die fusionierten Videobilder dem Fahrer präsentierbar sind.

## Claims

1. A method for making the surroundings of a vehicle visible, more especially for detecting and displaying the traffic situation located in front of a driver with a night vision information system, in which video images which substantially coincide in terms of place and time from different spectral ranges are merged, and in which, in the merging of the video images, the different spectral ranges are provided with weighting factors, **characterised in that** the video images are firstly weighted with a globally adjusted temporary weighting factor, **in that**, secondly an object analysis of the video images is carried out with the aid of an object recognition system (5), and **in that**, thirdly, an object-selective local adaptation of the weighting factors is carried out on the basis of the object analysis.

2. A method according to claim 1, **characterised in that** an object evaluation of the detected objects according to their relevance is carried out with the aid of the object recognition system (5), and **in that** the local weighting factors are adapted to the relevance of the respective object allocated on the basis of the object evaluation, so predetermined detected objects are in each case primarily shown in the spectral range, in which they are most clearly perceivable to the driver on the merged video image.

3. A method according to claim 2, **characterised in that** the detected objects are divided into object classes for the object evaluation.

4. A method according to any one of claims 1 to 3, **characterised in that** image areas in which no relevant objects are detected or the relevance of which cannot be clearly allocated, are weighted with the globally adjusted weighting factor.

5. A method according to any one of claims 1 to 4, **characterised in that** a constant transition is generated in the merged video image between adjacent relevant and non-relevant image areas with the aid of a variable characteristic line indication of the relationship of the weighting factors of the different spectral ranges.

6. A method according to any one of claims 1 to 5, **characterised in that** in the merging of the video images, radiation fractions with wavelengths from the visible spectral range and radiation fractions with wavelengths from the infrared spectral range are taken into account.

7. A method according to any one of claims 1 to 6, **characterised in that** colour information is processed in the visual video images.

8. A method according to any one of claims 1 to 7, **characterised in that** masking and/or covering effects of detected objects are suppressed, at least partially, with the aid of the adaptation of the local weighting factors.

9. A device for making the surroundings of a vehicle visible, more especially for detecting and displaying the traffic situation located in front of a driver with a night vision information system, in which video images, which substantially coincide in terms of place and time from different spectral ranges can be recorded with a camera system, and in which the video images can be merged in a weighted manner with a merging mechanism, **characterised in that** an object recognition system (5) is connected upstream from the merging mechanism (9), with which system objects, which are located in the surroundings of the vehicle can be detected via the camera system (2), and **in that** a control mechanism (6) is provided, via which, in operative connection with the object detection system (5), the merging mechanism (9) can be activated with an object-selective local spectral range weighting.

10. A device according to claim 9, **characterised in that** the camera system (2) has at least one sensor which is sensitive in the visible spectral range and at least one sensor which is sensitive in the infrared spectral range.

11. A device according to claim 9 or 10, **characterised in that** a head up display (10) is provided, on which the merged video images can be presented to the driver.

## Revendications

1. Procédé pour visualiser l'environnement d'un véhicule, notamment pour saisir et représenter la situation du trafic en avant du conducteur, utilisant un système d'information à amplification de lumière selon lequel sont fusionnées en continu des images vidéo prises des mêmes lieux, en même temps, dans des zones du spectre différentes, ces zones étant dotées lors de la fusion des images vidéo, de facteurs de pondération,
**caractérisé en ce que**
les images vidéo sont pondérées provisoirement au moyen d'un facteur provisoire de pondération réglé globalement,
une analyse d'objets des images vidéo est réalisée à l'aide d'un système de reconnaissance d'objets (5), et
sur la base de cette analyse est réalisée une adaptation des facteurs de pondération locale et sélective par rapport aux objets.

2. Procédé selon la revendication 1,
**caractérisé en ce qu'**
à l'aide du système de reconnaissance d'objets (5) est effectuée une évaluation des objets détectés en fonction de leur importance, et les facteurs locaux de pondération sont ajustés sur la base de l'importance affectée à chaque objet par l'évaluation d'objet, de sorte que des objets détectés prédéfinis sont représentés chaque fois principalement dans la zone du spectre où ils sont perceptibles le plus nettement sur l'image vidéo fusionnée par le conducteur.

3. Procédé selon la revendication 2,
**caractérisé en ce que**
pour l'évaluation, les objets détectés sont, divisés en classes d'objets.

4. Procédé selon une des revendications 1 à 3,
**caractérisé en ce que**
les zones de l'image dans lesquelles aucun objet important n'est détecté, ou auquel une importance ne peut être attribuée sans aucun doute, sont pondérées par un facteur de pondération défini globalement.

5. Procédé selon une des revendications 1 à 4,
**caractérisé en ce qu'**
entre des zones d'images voisines importantes et non importantes, une transition continue est réalisée dans l'image vidéo fusionnée à l'aide d'une courbe caractéristique variable du rapport des facteurs de pondération des différentes zones du spectre.

6. Procédé selon une des revendications 1 à 5,
**caractérisé en ce que**
lors de la fusion des images vidéo, sont prises en compte les fractions de rayonnement, dont les longueurs d'onde sont dans la zone visible du spectre, ainsi que les fractions de rayonnement dont les longueurs d'onde se trouvent dans la zone spectrale des infrarouges.

7. Procédé selon une des revendications 1 à 6,
**caractérisé en ce que**
des informations de couleur sont traitées dans les images vidéo visuelles.

8. Procédé selon une des revendications 1 à 7,
**caractérisé en ce que**
les effets de masquage et ou de couverture d'objets détectés sont éliminés au moins en partie à l'aide d'une adaptation des facteurs locaux de pondération.

9. Dispositif pour visualiser l'environnement d'un véhicule, notamment pour saisir et représenter la situation du trafic en avant du conducteur, utilisant un système d'information à amplification de lumière dans lequel sont fusionnées en continu des images vidéo prises des mêmes lieux, en même temps, dans des zones du spectre différentes, et dans lequel les images vidéo peuvent être fusionnées avec pondération au moyen d'un dispositif de fusion,
**caractérisé en ce qu'**
en amont du dispositif de fusion (9) est monté un dispositif de reconnaissance d'objets (5) par lequel des objets se trouvant dans l'environnement du véhicule, peuvent être détectés par le système de caméras (2), un dispositif de commande (6) étant prévu pour commander, en liaison active avec le système de reconnaissance d'objets (5), le dispositif de fusion (9) avec une pondération de zone spectrale, locale et sélective par rapport aux objets.

10. Dispositif selon la revendication 9,
**caractérisé en ce que**
le système de caméras (2) comprend au moins un capteur sensible dans le domaine de la zone visible du spectre et un capteur sensible dans la zone spectrale des infrarouges.

11. Dispositif selon la revendication 9 ou 10,
**caractérisé en ce qu'**
il est prévu un écran tête haute (10) sur lequel les images vidéo fusionnées peuvent être présentées au conducteur.
